# EUROPEAN PATENT APPLICATION

(11) **EP 2 602 426 A1**
(43) Date of publication of application: **12.06.2013**
(21) Application number: 11814096.1
(22) Date of filing: 02.08.2011
(51) Int. Cl.: E21B 43/00, E21C 41/26, C22B 3/04, C22B 59/00

(54) **LIQUID GUIDING AND COLLECTION PROCESS WITH SECONDARY CHANNELS FOR IN SITU LEACHING**

(30) Priority: 03.08.2010 CN 201010247813
(71) Applicant: Jiangxi Rare Earth & Rare Metals Tungsten Group Holding Co., Ltd., Nanchang, Jiangxi 330046 (CN)
(72) Inventor: TAN, Yaofeng, Nanchang Jiangxi 330046 (CN); LIU, Yan, Nanchang Jiangxi 330046 (CN); DENG, Guoqing, Nanchang Jiangxi 330046 (CN); HE, Xiaolin, Nanchang Jiangxi 330046 (CN)
(74) Representative: Mittler, Enrico
(86) International application number: PCT/CN2011/077907
(87) International publication number: WO 2012/016513

(57) **Abstract**

An in situ leaching liquid collection process with secondary channels comprises:1) multiple liquid collection channels are provided in an ore body; 2) secondary channels are provided at both sides of the liquid collection channels, the main channel and secondary channels forming a multi-channel guiding and collecting control face for pregnant solution; 3) a sealing wall is arranged in the liquid collection channels, and the lower frontal part of the sealing wall is connected to the channel outlet by a conduit controlled by a ball valve at the outlet; 4) by alternately releasing and increasing pressure in the measurement and production process, a multi-channel pregnant solution collection system is formed at the liquid collection project control face; 5) by means of changing the loss ratio of non-mineral liquid and pregnant solution, the rare earth recycling rate is improved. The process favors the recycling of rare earth pregnant solution, and can reduce environment pollution.

## Description

### Field of the Invention

The present invention relates to the technical field of mining, especially relates to an in-situ liquid collection process, in particular to, to a liquid collection process for in-situ leaching an ore body to extract ion adsorption type rare earth.

### Prior Art

In the prior art, there are mainly two kinds of in-situ leaching and liquid recovery technology for ion adsorption type rare earth.

The first kind of liquid recovery technology uses an artificial false bottom to take closure of a mother liquid for recovery. This technology adopts the liquid collection channel and its closure holes, and uses a cement slurry to provide a liquid recovery network with anti-seepage treatment, so as to set up an artificial mother liquid collection system. However, such a mother liquid recovery system has some obvious deficiencies. Firstly, the anti-seepage treatment of closure holes often results in blocking the closure holes; the impermeable materials often unfortunately do anti-seepage treatment for the upper half side walls and top walls of the closure holes, thus hinder the normal collection of mother liquid and increase the loss rate of mother liquid. Secondly, the closure holes cannot perfectly prevent from the infiltration of mother liquid. Finally, this mother liquid collection system cannot effectively reduce a loss rate of the non-mineral liquid and the rare earth mother liquid, which is unfavorable to the recovery of the rare earth mother liquid, thus reduces the rare earth recovery rate, hinders improvement of rare earth recovery rate, and certainly brings with environmental pollution.

The second kind of liquid recovery technology is to inject water into the lean ore formation or dead ground to saturation, so as to form an artificial water seal base plate. The most obvious defects of artificial water seal base plate include an excessive long construction time, a too long time to wait for mother liquid collecting, and a low mother liquid concentration, while the artificial water seal base plate cannot be used for all geological structure and is difficult to keep enough stability of mountain side slope. Therefore, the artificial water seal base plate is rarely used in the practical mining activities.

### Summary of the Invention

The object of the present invention is to provide a liquid collection process with secondary channels for in-situ leaching an ore body to extract rare earth, in which most of non-mineral liquid (more than 80%) may infiltrate downward through the engineering control surface, to increase the water content of the lean ore formation or dead ground below the engineering control surface, increase the ratio of non-mineral liquid penetrating into the lean ore formation or dead ground while decrease the ratio of mother liquid infiltrating downward, so as to improve the recovery rate of rare earth. This process can reduce the loss rate of the mother liquid, facilitate the recovery of rare earth mother liquid, reduce environmental pollution, and improve the recovery rate of rare earth.

Thus, the present invention provides a liquid collection process with secondary channels for in-situ leaching an ore body to extract rare earth, characterized in that:
1) multiple liquid collection channels are constructed in the ore body;
2) the secondary liquid channels are further constructed on both sides of the liquid collection channels. Through the alternative increasing and decreasing a pressure gradient, a multi-channel mother liquid drainage and liquid recovery engineering network is formed to include the liquid collection channels, the secondary liquid channels, as well as the ore bodies among channels, and the multi-channel mother liquid drainage and liquid recovery engineering network and the lean ore formation or dead ground with an increased water content ratio jointly form a mother liquid collection control system;
3) blocking walls are provided along the liquid collection channels, the front lower parts of the blocking walls are communicate with a liquid collection channel outlet through conduits, and the conduits are controlled with ball valve switches at the outlet;
4) in the measurement and production, through the changes of the pressure gradient, high and low pressure gradient areas are formed between the above ore body and the below engineering control network, and finally the multi-channel mother liquid collection engineering system is formed;
5) Under specific liquid recovery conditions, it is feasible to merely set up the primary liquid channels and the secondary liquid channels, without setting up the blocking walls and any anti-seepage treated bottom of channels.

In the present invention, the liquid collection channels is located according to the ore body grade at any single exploratory well, a distribution of ore body grades, and the principle of hydraulics. The positions of the liquid collection channels are determined according to the following principle:
1) the bottom of the liquid collection channels is located at a level of 0.015-0.02% thickness above the bottom of ore body;
2) the liquid collection channels are arranged along a profile of the mountain;
3) the positions of the liquid collection channels are preferably arranged to pass through where the ore bodies are with good grade,
then, secondary liquid channels are provided on both sides of the liquid collection channels, and the secondary liquid channels and the liquid collection channels joint form the multi-channel mother liquid drainage and liquid recovery control engineering network.

A plurality of blocking walls are provided in the liquid collection channels. These blocking walls are impermeable walls embedded into the periphery of the channels to prevent the non-mineral liquid from flowing out, and make the non-mineral liquid infiltrate below the engineering network (or called as a control surface). In the front and back of the blocking walls, supporting pillars are constructed to prevent the channels from collapse. In the working network, in a direction to the liquid collection outlet, blocking walls are set up at interval of 20-30m, until the last blocking wall is 10m away from the outlet. Multiple blocking walls can be provided. The positions of the blocking walls can be arranged in front of the channel supporting pillars and to be adjacent to them, so that the blocking walls can be protected against collapse. The blocking walls can be provided by laying common bricks into surrounding channels.

Before the blocking walls, there is filled with anti-blocking material, and the lower part of the blocking walls is connected to the liquid collection outlet by means of conduits. It is also necessary to provide sufficient anti-blocking measures for the channels and conduits. The conduits are controlled with the ball valve switches at the outlet. The ball valve switches are used to detect if there is any mother liquid. In operations, through increase and release of pressure, high and low pressure gradient areas are formed between the above bore body and the below engineering control surface, and finally a multi-path mother liquid recovery control engineering system is formed. The multi-path mother liquid recovery control engineering system and the lean ore formation or dead ground with an increased water content ratio jointly form a mother liquid collection control system. The main purpose of the conduits at the front lower parts of the blocking walls controlled with the ball valve switches at the outlet is to control the infiltration of the non-mineral liquid and the collection of mother liquid. The anti-blocking material may be firewood. The conduits can be plastic coil or PVC pipe.

In the production, it is necessary to make daily inspection to check whether there is any mother liquid in the conduits, in order to 1) drive the non-mineral liquid below the engineering control surface as much as possible, and thus reduce the infiltration of the mother liquid downward through the engineering control surface; 2) through alternate changes of the pressure in the ore earth between channels, form a multi-channel mother liquid recovery engineering control system. When mother liquid appears, it is required to open the ball valve switches, so that the multi-channel liquid collection channels and the lean ore formation or dead ground with the saturated water content jointly form a mother liquid collection system. If there is no mother liquid, it is required to close the ball valves. The times of daily inspection should be controlled in a flexible manner according to the characteristics of the non-mineral liquid, for example at most once per day. After inspection for many times, a multi-channel mother liquid recovery control network is finally formed, and this control network and the saturated or nearly saturated water seal surface below it jointly form a water sealed, multi-channel mother liquid drainage and mother liquid collection system with high pressure gradient.

Preferably, 2-3 primary liquid collection channels are mainly arranged along the profile or contour of the mountain, to pass through high grade ore bodies as much as possible. These channels are designed to have a gentle gradient of 1-2°, so as to facilitate the infiltration of the non-mineral liquid.

Preferably, under specific geologic conditions, it is feasible to adopt the static pressure grouting method to enable the most of non-mineral liquid to infiltrate into below the engineering control surface along the ore bodies among channels to form a water seal base plate, without need for setting up the blocking wall.

Preferably, the multiple liquid collection channels are arranged in parallel at interval of 15-20m.

More preferably, the sections of the liquid collection channels and the secondary channels are both trapezoidal; the lower bottom and the upper bottom of the liquid collection channels are respectively 1.4-1.6 times as wide as those of the secondary channels, while the liquid collection channels is 0.8-1.0 times as high as that of the secondary channels.

Preferably, these liquid collection channels have such a trapezoidal section with lower bottom width of 1.2m, upper bottom width of 0.7m, and height of 1.7m, while the secondary channels have such a trapezoidal section with lower bottom width of 0.8 m, upper bottom width of 0.4m, and height of 1.6-1.7m.

Preferably, the secondary channels are arranged on both sides of the liquid collection channels at interval of 5-10m and have angle of 90° with respect to the liquid collection channels, or these secondary channels are mutually parallel.

Preferably, under special geologic conditions, it is feasible to not to provide anti-seepage treatment to the bottom of the liquid collection channels and the secondary channels.

More preferably, the bottoms of the liquid collection channels and the secondary channels are provided with dilute cement slurry for anti-seepage treatment.

Preferably, in the liquid collection channels, in the front of the channel supporting pillars to be adjacent to them, the blocking walls are provided by laying common bricks into the periphery of the channels. Under special geologic conditions, it is also feasible to not to set up the blocking walls.

Preferably, the front of the blocking walls is filled with firewood, and their lower parts are connected to the outlet by means of a 1.5"-3"(inner diameter of 5cm) plastic coil or PVC pipes.

Preferably, in the measurement and production, the ball valve switches are opened and closed for many times, to form a decreased/increased pressure gradient between the below engineering control surface and the above ore earth; through the increase and decrease of pressure, high and low pressure gradient areas are formed between the above ore body and the below engineering control surface, and a water sealed, multi-channel mother liquid collection system with high pressure gradient is finally formed.

The present invention effectively uses a non-mineral liquid in the in-situ leaching of ion adsorption type rare earth. About 15% water content is contained in the granite weathering crust or volcanic tuff ion adsorption type rare earth. In the process of grouting in in-situ leaching in a static pressure, the water content (called **"non-mineral liquid")** is firstly driven out. This process allows most of the non-mineral liquid (about more than 80%) to infiltrate into the lean ore formation and the dead ground; furthermore, through the alternate operations to decrease and increase the pressure gradients between the below liquid recovery engineering control surface and the above ore earth, a multi-channel mother liquid drainage and liquid recovery control surface is formed. This invention can increase the water content of the lean ore formation and dead ground, hinder the rare earth mother liquid to infiltrate downward, reduce the consumption of leaching agent, and reduce the loss rate of mother liquid. The multi-channel mother liquid recovery control surface formed by the present invention can facilitate the recovery of the rare earth mother liquid and reduce the environmental pollution. It has been proved by both theory and practice that, the rare earth resource recovery rate is improved by more than 10% according to the present invention, namely the rare earth recovery rate is improved.

### Description of Accompanying Drawings

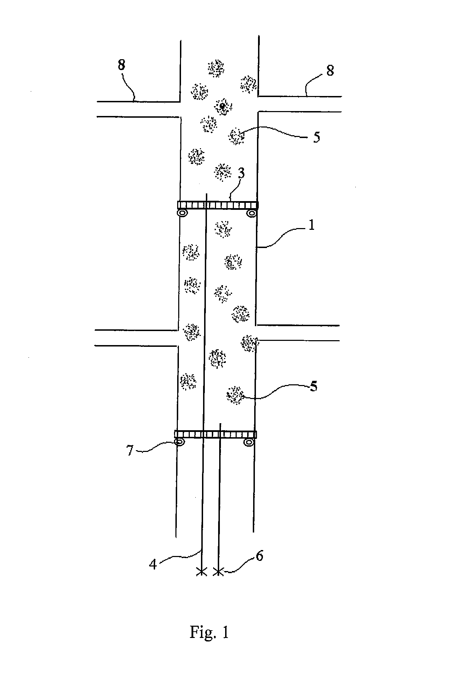

Fig. 1 is a top view of the liquid collection channels of the present invention, in which the liquid collection channels are connected with the secondary channels.

### Detailed Description of Preferred Embodiments

With reference to the Fig. 1, an embodiment of the present invention is described as follows. According to the rare earth grade distribution of ore bodies as well as the principle of hydraulics, at the height of 0.015% - 0.02% of thickness of the ore bodies above the bottom of ore bodies, the primary liquid collection channels 1 are arranged along the outline or inclination of the mountain, and the liquid collection channels 1 are so arranged to pass through high grade ore bodies as much as possible. These channels 1 have a gentle gradient of 1-2°. The secondary channels 8 are provided on both sides of the liquid collection channels 1 at interval of 5-10m. It is feasible to make a cement slurry anti-seepage treatment at the bottom of the channels 1. It is feasible to set up multiple supporting pillars 7 at both side walls of the liquid collection channels 1. After the construction of the liquid collection channels 1, a blocking wall 3 is built before a nearby supporting pillar 7 at interval of 20-30m, so as to divide the liquid collection channels 1 into several segments. The bottom of each blocking wall 3 is connected to the outlet by means of coil pipe or PVC pipe 4 to collect the mother liquid. Each segment of liquid collection channels 1, which is separated by the blocking walls 3, is provided with one coil pipe or PVC pipe 4 that is connected to the outlet. The channels in the front of the blocking walls 3 (the side kept away from the ball valves 6) are filled with anti-blocking firewood 5 for anti-blocking treatment. Ball valve switches 6 are connected at the outlet of the coil pipe or PVC pipe 4. In the measurement or production, the non-mineral liquid is driven to infiltrate downward along the control surface formed by the liquid collection channels 1 and the secondary channels 8. Only when there is the mother liquid, the liquid recovery system begins to work. Through the release of pressure, high pressure gradient is formed between the above ore body and the below engineering control surface, and finally a multi-channel mother liquid collection engineering system is formed. This multi-channel mother liquid collection engineering system and the lean ore formation or dead ground with saturated water content jointly form a mother liquid collection system.

## Claims

1. A liquid collection process with secondary channels for in-situ leaching an ore body to extract rare earth, **characterized in that**: 1) multiple liquid collection channels are provided in the ore body; 2) secondary channels are provided on both sides of the liquid collection channels, and through increasing and releasing pressure, a multi-channel mother liquid drainage and collection engineering network is finally formed with the liquid collection channels, the secondary channels, and the ore earths among channels; 3) a blocking wall is provided in the liquid collection channels, the lower part of the blocking wall is connected to a channel outlet by means of a conduit, and the conduit is controlled with a ball valve switch at the outlet; 4) in measurement or production, through the changes of the pressure, the pressure gradient is formed between the above ore body and the below engineering network, a multi-channel mother liquid collection engineering system is finally formed, and the multi-channel mother liquid collection engineering network and the lean ore formation or dead ground with a changed water content ratio (i.e. saturated with the non-mineral liquid) jointly constitute a mother liquid collection system; 5) in specific condition, it is allowable to merely provide the primary channels and the secondary channels, without providing the blocking walls and/or anti-seepage treatment for the bottom of channels.

2. The liquid collection process of claim 1, **characterized in that**, the positions of the liquid collection channels are determined according to the following principles:
1) the bottom of the liquid collection channels is 0.015-0.02% of the thickness of the ore body over the bottom of the ore body;
2) the liquid collection channels are arranged along the profile of the mountain body; and/or
3) the liquid collection channels are arranged to pass through the ore bodies with rich rare earth.

3. The liquid collection process of claim 1, **characterized in that**, the slope or gradient of the liquid collection channels is 1-2°, and the liquid collection channels are 2-3 parallel channels which are arranged at interval of 20-30m and along the contour or inclination of the mountain.

4. The liquid collection process of claim 1, **characterized in that**, the secondary channels are arranged at interval of 5-10m and have an angle of 90° with respect to the liquid collection channel, or these secondary channels are parallel with each other.

5. The liquid collection process of claim 1, **characterized in that**, the bottom of the liquid collection channels is provided with anti-seepage treatment by means of a dilute cement slurry.

6. The liquid collection process of claim 1, **characterized in that**, the bottom of the secondary channels arranged on both sides of the liquid collection channels is provided with anti-seepage treatment by means of a dilute cement slurry.

7. The liquid collection process of claim 1, **characterized in that**, the blocking walls are impermeable walls embedded into the periphery of the channels, and the front and back of the blocking walls are constructed to prevent the channels from collapse.

8. The liquid collection process of claim 1, **characterized in that**, the front of the blocking walls is filled with an anti-blocking material, and the liquid collection pipe at the lower part of the blocking walls is extended to a channel outlet where a ball valve switch is used to control the infiltration of non-mineral liquid and the collection of the mother liquid.

9. The liquid collection process of claim 1, **characterized in that**, the ball valve switch is operated to open or close for many times, to make a decreased/increased pressure gradient between the above ore earth and the below engineering control network, and finally a water-sealed multi-channel mother liquid collection system with high pressure gradient is formed.

10. The liquid collection process of claim 1, **characterized in that**, the sections of both the liquid collection channels and the secondary channels are trapezoidal; the lower bottom and the upper bottom of the liquid collection channels are respectively 1.4-1.6 times as wide as those of the secondary channels, while the liquid collection channels is 0.8-1.0 times as high as that of the secondary channels.
